# EUROPÄISCHE PATENTSCHRIFT

(11) **EP 2 790 940 B1**
(45) Veröffentlichungstag und Bekanntmachung des Hinweises auf die Patenterteilung: **12.04.2017**
(21) Anmeldenummer: 12799531.4
(22) Anmeldetag: 27.11.2012
(51) Int. Cl.: B60J 5/10, E05F 5/02

(54) **HALTEANORDNUNG EINES FLÜGELELEMENTS, INSBESONDERE EINER HAUBE, EINER KLAPPE ODER DERGLEICHEN, UND EINES VERKLEIDUNGSELEMENTS AN EINEM KRAFTWAGENAUFBAU**
HOLDING ARRANGEMENT OF A WING ELEMENT, IN PARTICULAR OF A HOOD, A TAILGATE OR THE LIKE, AND OF A TRIM ELEMENT ON A MOTOR VEHICLE STRUCTURE
SYSTÈME DE RETENUE D'UN ÉLÉMENT D'AILE, EN PARTICULIER D'UN CAPOT, D'UNE TRAPPE OU SIMILAIRE, ET D'UN ÉLÉMENT DE REVÊTEMENT SUR UNE CARROSSERIE DE VÉHICULE

(30) Priorität: 13.12.2011 DE 102011088428
(43) Veröffentlichungstag der Anmeldung: 22.10.2014
(73) Patentinhaber: Bayerische Motoren Werke Aktiengesellschaft, 80809 München (DE)
(72) Erfinder: MIESLINGER, Stefan, 84034 Landshut (DE); KNECHTEL, Marcus, 85551 Kirchheim (DE)
(86) Internationale Anmeldenummer: PCT/EP2012/073747
(87) Internationale Veröffentlichungsnummer: WO 2013/087409

(56) Entgegenhaltungen:
- EP-A2- 1 258 417
- DE-A1- 19 644 236
- DE-A1-102004 057 472

## Beschreibung

Die Erfindung betrifft eine Halteanordnung eines Flügelelements, insbesondere einer Haube, einer Klappe oder dergleichen, und eines Verkleidungselements an einem Kraftwagenaufbau gemäß dem Oberbegriff von Patentanspruch 1.

Derartige Halteanordnungen sind aus dem Serienbau von Personenkraftwagen hinlänglich bekannt. Bei einer solchen Halteanordnung ist ein Flügelelement, beispielsweise eine Fronthaube oder eine Heckklappe, an einer Karosserie eines Personenkraftwagens gehalten. Dabei ist das Flügelelement um eine Schwenkachse relativ zur Karosserie zwischen einer eine korrespondierende Öffnung der Karosserie zumindest in einem Teilbereich verschließenden Schließstellung und wenigstens einer die Öffnung in dem Teilbereich freigebenden Offenstellung verschwenkbar. Des Weiteren ist bei der Halteanordnung ein Verkleidungselement des Personenkraftwagens an der Karosserie über wenigstens ein Befestigungselement gehalten. Das Verkleidungselement und das Flügelelement begrenzen bzw. bilden in der Schließstellung des Flügelelements einen Spalt.

Eine solche Halteanordnung ist beispielsweise aus der DE 196 49 311 C1 bekannt. Dabei ist ein Anschlagelement zur Seitenführung und Stabilisierung des Flügelelements vorgesehen.

Die DE 10 2004 057 472 A1 offenbart eine Abstützeinrichtung für eine Motorhaube eines Kraftfahrzeuges mit einem ersten Element, das an einer Unterseite der Motorhaube an einem vorderen Rand davon anbringbar und zur Aufnahme von Kräften aus im Wesentlichen vertikaler Richtung geeignet ist. In der Schließstellung der Motorhaube ist zwischen der Motorhaube und einem Trägerteil eines Kühlgitters ein Spalt begrenzt.

Es hat sich gezeigt, dass der Aufwand zur präzisen Ausrichtung des Verkleidungselements bzw. des Kühlgitters relativ zum Flügelelement, um ein geringes Spaltmaß und somit ein optisch ansprechendes Fugenbild einzustellen, sehr hoch ist, was mit hohen Kosten einhergeht.

Auch die Ausrichtung des Anschlagelements sowie der Abstützeinrichtung zur Verhinderung einer Kollision des Flügelelements bei dessen Bewegung in die Schließstellung mit einem anderweitigen Bauelement des Personenkraftwagens erfordern einen nicht unerheblichen Zeit- und Kostenaufwand.

Ferner ist in der DE 196 44 236 A1 eine Vorbaustruktur für einen Personenkraftwagen gezeigt, in dem ein Pufferzapfen an einem horizontalen Flanschblech, das an einem Vorbaulängsträger fixiert ist, angebracht ist. Der Pufferzapfen dient als Anschlagelement für eine Motorhaube.

Darüber hinaus zeigt die EP 1 258 417 A2 eine Halteanordnung gemäß dem Oberbegriff von Patentanspruch 1 der vorliegenden Erfindung.

Es ist daher Aufgabe der vorliegenden Erfindung, eine Halteanordnung der eingangs genannten Art derart weiterzuentwickeln, dass die Einstellung des Fugenbilds sowie die Ausrichtung des Anschlagelements zeit- und kostengünstig erfolgen können.

Diese Aufgabe wird durch eine Halteanordnung mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Bei einer solchen Halteanordnung eines Flügelelements und eines Verkleidungselements an einem Kraftwagenaufbau, insbesondere an einer Personenkraftwagenkarosserie, ist das Flügelelement um eine Schwenkachse zwischen einer eine korrespondierende Öffnung des Kraftwagenaufbaus zumindest in einem Teilbereich verschließenden Schließstellung und wenigstens einer der Öffnung in dem Teilbereich freigebenden Offenstellung relativ zu dem Kraftwagenaufbau verschwenkbar an dem Kraftwagenaufbau gehalten. Des Weiteren ist das Verkleidungselement über wenigstens ein korrespondierendes Befestigungselement an dem Kraftwagenaufbau, insbesondere an der Personenkraftwagenkarosserie, gehalten. In der Schließstellung des Flügelelements ist zwischen dem Flügelelement und dem Verkleidungselement ein Spalt einerseits durch das Flügelelement und andererseits durch das Verkleidungselement begrenzt.

Erfindungsgemäß ist an dem Befestigungselement wenigstens ein Anschlagelement angeordnet, an welchem das Flügelelement bei der Bewegung in die Schließstellung abstützbar ist. Infolge der Anordnung des Anschlagelements an dem Befestigungselement kann die Ausrichtung des Anschlagelements relativ zum Flügelelement im Rahmen der Herstellung der Halteanordnung zumindest im Wesentlichen zeitgleich mit der Montage und mit der Ausrichtung des Befestigungselements relativ zum Flügelelement einhergehen. Da das Verkleidungselement über das Befestigungselement am Kraftwagenaufbau befestigt wird, ist somit auch gleichzeitig das Verkleidungselement relativ zum Flügelelement ausgerichtet und positioniert. Dadurch ist ein vorteilhaftes Spaltmaß einfach und schnell eingestellt. Dies führt zu einem optisch ansprechenden Fugenbild des Kraftwagens.

Im Rahmen der Herstellung der erfindungsgemäßen Halteanordnung bzw. der Montage des Kraftwagens erfolgt die Ausrichtung des Befestigungselements relativ zum Flügelelement vorzugsweise in der Schließstellung des Flügelelements. Dabei wird das Befestigungselement und mit diesem das am Befestigungselement angeordnete Anschlagelement in wenigstens einer Bewegungsrichtung relativ zu dem Flügelelement bewegt, bis beispielsweise das Anschlagelement in Stützanlage mit dem sich in der Schließstellung befindenden Flügelelement kommt. In dieser Stützanlage sind sowohl das Anschlagelement als auch das mit diesem verbundene Befestigungselement in einer vorteilhaften Relativposition zum Flügelelement ausgerichtet, so dass nach der Befestigung des Verkleidungselement am Befestigungselement auch das Verkleidungselement relativ zum Flügelelement vorteilhaft ausgerichtet und das optisch ansprechende Fugenbild auf einfache, zeit- und kostengünstige Weise hergestellt ist.

Bei der erfindungsgemäßen Halteanordnung können somit jeweilige, separate Ausrichtvorgänge zum separaten Ausrichten des Verkleidungselements und des Anschlagelements relativ zum Flügelelement vermieden werden. Gleichzeitig kann eine vorteilhafte Funktionalität des Anschlagelements gewährleistet werden, welches eine Kollision des Flügelelements bei der Bewegung des Flügelelements in seine Schließstellung mit einem anderweitigen Bauelement des Kraftwagens, beispielsweise mit dem Kraftwagenaufbau, vermeidet. Das Anschlagelement kann das Flügelelement abstützen und ein Durchschlagen des Flügelelements verhindern. Somit können zusätzliche Puffer- und/oder Dämpferelemente zum Verhindern des Durchschlagens vermieden werden. Dies hält die Teileanzahl, das Gewicht und die Kosten der erfindungsgemäßen Halteanordnung gering.

Vorzugsweise erfolgt die gleichzeitige Ausrichtung des Befestigungselements und des Anschlagelements zumindest im Wesentlichen senkrecht zur Längserstreckungsrichtung des Spalts. Dadurch sind das Spaltmaß und somit das Fugenbild besonders zeit- und kostengünstig einstellbar.

Ist das Anschlagelement im Rahmen der Herstellung der erfindungsgemäßen Halteanordnung in Stützanlage mit dem sich in der Schließstellung befindenden Flügelelement bewegt, so dass dadurch das Anschlagelement sowie das Befestigungselement präzise in eine vorgebbare Relativposition zum Flügelelement ausgerichtet sind, so werden das Befestigungselement und damit das Anschlagelement in ihre Endmontageposition am Kraftwagenaufbau befestigt und in ihrer eingestellten Endmontageposition gesichert.

Bei dem Flügelelement handelt es sich beispielsweise um eine Fronthaube, insbesondere eine Motorhaube, oder um eine Heckklappe des Kraftwagens. Bei dem Verkleidungselement handelt es sich beispielsweise um ein Stoßfängerverkleidungselement, welches zum Verkleiden eines Biegequerträgers eines Stoßfängers des Kraftwagens dient und welches sich in der Schließstellung des Flügelelements in Fahrzeughochrichtung nach unten anschließt. Dabei verläuft die Längserstreckungsrichtung des Spalts zumindest im Wesentlichen in Fahrzeugquerrichtung. Die Relativbewegung des Befestigungselements und damit des Anschlagelements, um das Anschlagelement in Stützanlage mit der Heckklappe zu bewegen, erfolgt hierbei in Fahrzeughochrichtung (z-Richtung).

Gemäß der vorliegenden Erfindung weist das Befestigungselement oder der Kraftwagenaufbau wenigstens eine Führung auf, entlang welcher das Befestigungselement und mit diesem das Anschlagelement bei der Montage des Befestigungselements am Kraftwagenaufbau relativ zu dem Flügelelement, insbesondere senkrecht zur Längserstreckungsrichtung des Spalts, bewegbar ist. Die Führung ermöglicht eine präzise Ausrichtung des Befestigungselements und des Anschlagelements, was mit einer zeit- und kostengünstigen Montage einhergeht.

In die Führung greift beispielsweise ein Befestigungsmittel zum Befestigen des Befestigungselements am Kraftwagenaufbau ein, so dass das Befestigungselement und das Anschlagelement präzise ausgerichtet werden können. Bei dem Befestigungsmittel kann es sich um ein Schraubelement, einen Schraubbolzen oder dergleichen handeln.

Vorzugsweise ist die Führung ein Langloch. Dies hält die Kosten der erfindungsgemäßen Halteanordnung besonders gering und ermöglicht gleichzeitig die präzise Ausrichtung des Anschlagelements und des Befestigungselements relativ zum Flügelelement.

Bei einer weiteren vorteilhaften Ausführungsform der Erfindung ist das Anschlagelement über ein Halteelement am Befestigungselement angeordnet. Somit kann die zeit- und kostengünstige Ausrichtung des Befestigungselements und des Anschlagelements auch dann erfolgen, wenn eine Stützfläche des Flügelelements, über welche das Anschlagelement in Stützanlage mit dem Flügelelement zu bewegen ist, relativ weit von dem Befestigungselement entfernt ist. Ferner können dadurch die äußeren Dimensionen des Anschlagelements und damit sein Gewicht und seine Kosten gering gehalten werden.

In weiterer vorteilhafter Ausgestaltung sind das Halteelement und das Befestigungselement aus voneinander unterschiedlichen Werkstoffen gebildet. Das Halteelement und das Befestigungselement können somit auf ihre jeweiligen Funktionen sowie hinsichtlich der jeweiligen, an sie gestellten Anforderungen bedarfsgerecht ausgestaltet werden. Daraus resultieren ein geringes Gericht und geringe Kosten der Halteanordnung.

Vorzugsweise ist dabei vorgesehen, dass das Halteelement und das Befestigungselement durch ein Hybridbauteil gebildet sind. Mit anderen Worten ist das Halteelement in das Befestigungselement integriert. Dies hält die Teileanzahl und das Gewicht der erfindungsgemäßen Halteanordnung besonders gering.

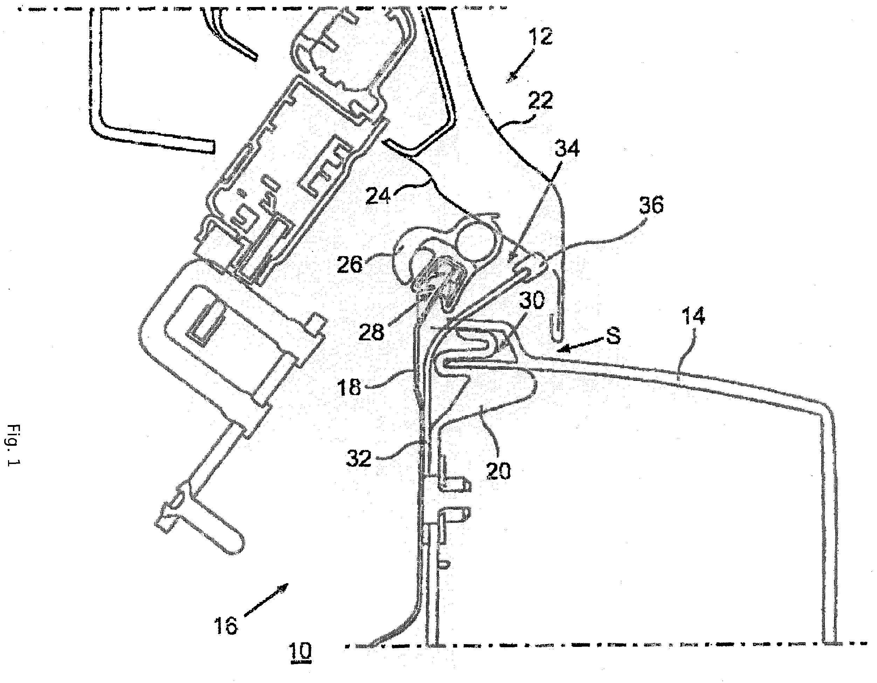

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur ausschnittsweise eine schematische Schnittansicht einer Halteanordnung einer Heckklappe und eines Stoßfängerverkleidungselements an einer Karosserie eines Personenkraftwagens, bei welcher das Stoßfängerverkleidungselement über ein Befestigungselement an der Karosserie befestigt ist, wobei an dem Befestigungselement ein Durchschlagsschutzelement angeordnet ist, mittels welchem eine Kollision der Heckklappe mit wenigstens einem anderweitigen Bauelement des Personenkraftwagens verhinderbar ist.

Die Figur zeigt eine Halteanordnung 10 einer Heckklappe 12 und eines Stoßfängerverkleidungselements 14 an einer Karosserie 16 eines Personenkraftwagens. Von der Karosserie 16 ist in der Figur ein Rohbaublech 18 erkennbar, an welchem das Stoßfängerverkleidungselement 14 über wenigstens ein Befestigungselement 20 befestigt ist. Das Befestigungselement 20 ist dabei bezogen auf die Fahrzeugquerrichtung zumindest im Wesentlichen in einem Mittelbereich des Stoßfängerverkleidungselements 14 angeordnet. Das Stoßfängerverkleidungselement 14 dient zum Verkleiden eines Biegequerträgers eines Stoßfängers des Personenkraftwagens.

Die Heckklappe 12 umfasst ein Außenblech 22 und ein Innenblech 24, welche miteinander verbunden sind. Die Heckklappe 12 ist an der Karosserie um eine Schwenkachse zwischen einer Schließstellung und wenigstens einer Offenstellung relativ zur Karosserie verschwenkbar gehalten. In der Schließstellung ist eine Kofferraumöffnung der Karosserie 16 verschlossen. In der Offenstellung ist die Kofferraumöffnung zumindest bereichsweise freigegeben.

Zum Verschwenken der Heckklappe 12 zwischen der Offenstellung und der Schließstellung kann wenigstens ein Stellglied vorgesehen sein, mittels welchem die Heckklappe 12 automatisch verschwenkbar ist. Dadurch weist die Heckklappe 12 einen besonders hohen Betätigungskomfort auf.

Wie der Figur zu entnehmen ist, ist ein Dichtungselement 26 vorgesehen, welches eine Steckaufnahme 28 aufweist. Über die Steckaufnahme 28 ist das Dichtungselement 26 auf das Rohbaublech 18 aufgesteckt.

In ihrer in der Figur gezeigten Schließstellung befindet sich die Heckklappe 12 in Stützanlage mit dem Dichtungselement 26, so dass der Kofferraum gegen ein unerwünschtes Eindringen von Feuchtigkeit abgedichtet ist.

Zur Befestigung des Stoßfängerverkleidungselements 14 am Befestigungselement 20 weist das beispielsweise aus einem Kunststoff gebildete Stoßfängerverkleidungselement 14 eine weitere Steckaufnahme 30 auf, in die das Befestigungselement 20 zumindest teilweise eingesteckt ist. Dadurch ist das Stoßfängerverkleidungselement 14 vorzugsweise mit dem Befestigungselement 20 verclipst und eine zeit- und kostengünstige Befestigung des Stoßfängerverkleidungselements 14 realisiert.

An dem Befestigungselement 20 ist nun ein Halteelement in Form eines Durchschlagblechs 32 angeordnet, welches beispielsweise aus einem metallischen Werkstoff gebildet ist. Dabei kann das Durchschlagblech 32 in das Befestigungselement 20 integriert sein. Vorzugsweise ist das Befestigungselement 20 aus einem Kunststoff gebildet, wobei das aus dem Kunststoff gebildete Befestigungselement 20 und das an diesem angeordnete, aus einem metallischen Werkstoff gebildete Durchschlagblech 32 durch ein Hybridelement gebildet sind.

Das Durchschlagblech 32 ist einem Durchschlagsschutzelement 34 der Halteanordnung 10 zugeordnet. Das Durchschlagsschutzelement 34 umfasst das Durchschlagblech 32 sowie wenigstens ein Anschlagelement 36, welches an dem Durchschlagblech 32 gehalten ist. Bei dem Anschlagelement 36 kann es sich um ein Kantenschutzelement für das Durchschlagblech 32 handeln.

Das Anschlagelement 36 dient zur Abstützung der Heckklappe 12, wenn diese mit unzulässig hohen Kräften aus ihrer Offenstellung in ihre Schließstellung bewegt wird. Das Anschlagelement 36 vermeidet dabei Kollisionen der Heckklappe 12 bei einer solchen unzulässigen Bewegung in ihre Schließstellung mit anderweitigen Bauelementen des Personenkraftwagens und verhindert somit ein Durchschlagen der Heckklappe 12.

Wie der Figur ferner zu entnehmen ist, ist zwischen dem Stoßfängerverkleidungselement 14 und der Heckklappe 12 in der Schließstellung der Heckklappe 12 ein Spalt S begrenzt, der eine sich zumindest im Wesentlichen in Fahrzeuglängsrichtung erstreckende Längserstreckungsrichtung aufweist. Zur Darstellung einer relativ geringen und über die Fahrzeugquerrichtung hinweg gleichmäßigen, in Fahrzeughochrichtung verlaufenden Höhe des Spalts S ist eine präzise Ausrichtung des Stoßfängerverkleidungselements 14 relativ zur Heckklappe 12 vonnöten. Dadurch können ein optisch ansprechendes Spaltmaß und somit ein optisch ansprechendes Fugenbild des Personenkraftwagens dargestellt werden.

Zur Darstellung einer besonders zeit- und kostengünstigen Positionierung des Stoßfängerverkleidungselements 14 sowie des Anschlagelements 36 relativ zur Heckklappe 12 ist das Durchschlagsschutzelement 34 an dem Befestigungselement 20 angeordnet, d.h. mit diesem verbunden. Durch diese Anordnung bzw. Verbindung können das Befestigungselement 20 und das Durchschlagsschutzelement 34 gemeinsam und somit zeitgleich bewegt und relativ zur Heckklappe 12 ausgerichtet werden.

Im Rahmen der Befestigung des Befestigungselements 20 und damit des Durchschlagsschutzelements 34 an der Karosserie 16 wird beispielsweise ein Befestigungsbolzen der Karosserie 16, welcher fest mit der Karosserie 16 verbunden ist, in ein Langloch des Befestigungselements 20 und gegebenenfalls des Durchschlagblech 32 eingeführt. Mit anderen Worten greift der Befestigungsbolzen in das Langloch ein und durchdringt dieses. Das Langloch erstreckt sich dabei zumindest im Wesentlichen in Fahrzeughochrichtung. Das Langloch stellt somit eine Führung dar, entlang welcher das Befestigungselement 20 und mit diesem das Durchschlagsschutzelement 34 in Fahrzeughochrichtung (z-Richtung) relativ zur Heckklappe 12 bewegt werden können.

Das Befestigungselement 20 und mit diesem das Durchschlagsschutzelement 34 werden so lange in Fahrzeughochrichtung nach oben relativ zur sich in der Schließstellung befindenden Heckklappe 12 bewegt, bis das Anschlagelement 36 in Stützanlage mit der Heckklappe 12 kommt. Befindet sich das Anschlagelement 36 in Stützanlage mit der sich in der Schließstellung befindenden Heckklappe 12, so ist eine Endmontageposition des Befestigungselements 20 und des Durchschlagsschutzelements 34 eingestellt, welche sowohl zur vorteilhaften Funktion des Anschlagelements 36 sowie zur vorteilhaften Positionierung des Stoßfängerverkleidungselements 14 relativ zu Heckklappe 12 führt.

In dieser Endmontageposition werden das Befestigungselement 20 und das Durchschlagsschutzelement 34 befestigt, indem beispielsweise ein Schraubelement mit dem Befestigungsbolzen verschraubt wird. Anschließend wird das Stoßfängerverkleidungselement 14 zeit- und kostengünstig an dem Befestigungselement 20 befestigt. Dabei ist das Stoßfängerverkleidungselement 14 zur Darstellung eines optisch ansprechenden Spaltmaßes vorteilhaft zur Heckklappe 12 ausgerichtet, da das Befestigungselement 20 auf die geschilderte Weise vorteilhaft relativ zur Heckklappe 12 ausgerichtet ist.

Daraus ist es ersichtlich, dass die vorteilhafte Positionierung bzw. Ausrichtung des Anschlagelements 36 relativ zur Heckklappe 12 zeitgleich einher geht mit der vorteilhaften Positionierung bzw. Ausrichtung des Befestigungselements 20 und damit des Stoßfängerverkleidungselements 14 relativ zur Heckklappe 12. Separate Ausrichtvorgänge sind nicht vorgesehen und nicht vonnöten. Gleichzeitig kann der Durchschlagsschutz ohne zusätzliche, kostenaufwändige Puffer- und Dämpferelemente gewährleistet und ein optisch ansprechendes Fugenbild ohne die Verwendung von Lehren und/oder anderweitigen, zusätzlichen Positionierungsmitteln eingestellt werden.

## Patentansprüche

1. Halteanordnung (10) eines Flügeleiements (12) und eines Verkleidungselements (14) an einem Kraftwagenaufbau (16), bei welcher das Flügelelement (12) um eine Schwenkachse zwischen einer eine korrespondierende Öffnung zumindest in einem Teilbereich verschließenden Schließstellung und wenigstens einer die Öffnung in dem Teilbereich freigebenden Offenstellung relativ zu dem Kraftwagenaufbau (16) verschwenkbar und das Verkleidungselement (14), zwischen welchem und dem Flügelelement (12) in der Schließstellung ein Spalt (S) begrenzt ist, über wenigstens ein korrespondierendes Befestigungselement (20) an dem Kraftwagenaufbau (16) gehalten ist, wobei an dem Befestigungselement (20) wenigstens ein Anschlagelement (36) angeordnet ist, an welchem das Flügelelement (12) bei der Bewegung in die Schließstellung abstützbar ist,
wobei das Verkleidungselement (14) durch das Befestigungselement (20) relativ zu dem Flügelelement (12) ausrichtbar und positionierbar ist,
**dadurch gekennzeichnet, dass** das Befestigungselement (20) oder der Kraftwagenaufbau (16) wenigstens eine Führung aufweist, entlang welcher das Befestigungselement (20) und mit diesem das Anschlagelement (36) bei einer Montage des Befestigungselements (20) am Kraftwagenaufbau (16) relativ zu dem Flügelelement (12) bewegbar ist.

2. Halteanordnung (10) nach Anspruch 1, **dadurch gekennzeichnet, dass** das Befestigungselement (20) und mit diesem das Anschlagelement (36) bei der Montage des Befestigungselements (20) am Kraftwagenaufbau (16) entlang der Führung relativ zu dem Flügelelement (12) senkrecht zur Längserstreckungsrichtung des Spalts (S) bewegbar ist.

3. Halteanordnung (10) nach Anspruch 1 oder 2, **dadurch gekennzeichnet, dass** die Führung ein Langloch ist.

4. Halteanordnung (10) nach einem der vorhergehenden Ansprüche, **dadurch gekennzeichnet, dass** das Anschlagelement (36) über ein Halteelement (32) am Befestigungselement (20) angeordnet ist.

5. Halteanordnung (10) nach Anspruch 4, **dadurch gekennzeichnet, dass** Haltelement (32) und das Befestigungselement (20) aus voneinander unterschiedlichen Werkstoffen gebildet sind.

6. Halteanordnung (10) nach Anspruch 5, **dadurch gekennzeichnet, dass** das Halteelement (32) und das Befestigungselement (20) durch ein Hybridbauteil gebildet sind.

## Claims

1. A holding arrangement (10) of a wing element (12) and of a trim element (14) on a motor vehicle body (16), in which arrangement the wing element (12) is swivellable, relative to the motor vehicle body (16), about a swivel axis between a closed position closing a corresponding opening at least in a partial region and at least one open position releasing the opening in the partial region, and the trim element (14), between which and the wing element (12) a gap (S) is defined in the closed position, is held on the motor vehicle body (16) by at least one corresponding fastening element (20), wherein arranged on the fastening element (20) is at least one stop element (36) on which the wing element (12) can be supported during the movement into the closed position, wherein the trim element (14) can be oriented and positioned relative to the wing element (12) by the fastening element (20), **characterised in that** the fastening element (20) or the motor vehicle body (16) has at least one guide means, along which the fastening element (20) and therewith the stop element (36) can be moved relative to the wing element (12) during assembly of the fastening element (20) on the motor vehicle body (16).

2. A holding arrangement (10) according to claim 1, **characterised in that** the fastening element (20) and therewith the stop element (36) can be moved along the guide means relative to the wing element (12) vertically to the longitudinal extent direction of the gap (S) during assembly of the fastening element (20) on the motor vehicle body (16).

3. A holding arrangement (10) according to claim 1 or claim 2, **characterised in that** the guide means is a slot.

4. A holding arrangement (10) according to any of the preceding claims, **characterised in that** the stop element (36) is arranged on the fastening element (20) by a holding element (32).

5. A holding arrangement (10) according to claim 4, **characterised in that** the holding element (32) and the fastening element (20) are formed from different materials.

6. A holding arrangement (10) according to claim 5, **characterised in that** the holding element (32) and the fastening element (20) are formed by a hybrid component.

## Revendications

1. Dispositif de retenue (10) d'un élément d'aile (12) et d'un élément d'habillage (14) sur une structure de véhicule (16) dans lequel l'élément d'aile (12) peut pivoter par rapport à la structure (16) du véhicule, autour d'un axe de pivotement, entre une position de fermeture dans laquelle il ferme une ouverture correspondante, au moins dans une zone partielle, et au moins une position d'ouverture dans laquelle il libère l'ouverture dans la zone partielle, et l'élément d'habillage (14) entre lequel et l'élément d'aile (12) est délimitée une fente (S) en position de fermeture est maintenue sur la structure (16) du véhicule par l'intermédiaire d'au moins un élément de fixation (20) correspondant, sur lequel est monté monté au moins un élément formant butée (36) sur lequel peut s'appuyer l'élément d'aile (12) lors du déplacement dans la position de fermeture,
l'élément d'habillage (14) pouvant être orienté et positionné par rapport à l'élément d'aile (12) par l'intermédiaire de l'élément de fixation (20),
**caractérisé en ce que**
l'élément de fixation (20) ou la structure (16) du véhicule comprend au moins un guidage le long duquel l'élément de fixation (20) et avec celui-ci l'élément formant butée (36) peut être déplacé par rapport à l'élément d'aile (12) lors du montage de l'élément de fixation (20) sur la structure (16) du véhicule.

2. Dispositif de retenue (10) conforme à la revendication 1,
**caractérisé en ce que**
l'élément de fixation (20) et avec celui-ci l'élément formant butée (36) peut, lors du montage de l'élément de fixation (20) sur la structure (16) du véhicule être déplacé le long du guidage, par rapport à l'élément d'aile (12) perpendiculairement à la direction d'extension longitudinale de la fente (S).

3. Dispositif de retenue (10) conforme à la revendication 1 ou 2,
**caractérisé en ce que**
le guidage est à trou oblong.

4. Dispositif de retenue (10) conforme à l'une des revendications précédentes,
**caractérisé en ce que**
l'élément formant butée (36) est monté sur l'élément de fixation (20) par l'intermédiaire d'un élément de retenue (32).

5. Dispositif de retenue (10) conforme à la revendication 4,
**caractérisé en ce que**
l'élément de retenue (32) et l'élément de fixation (20) sont réalisés en des matériaux différents.

6. Dispositif de retenue (10) conforme à la revendication 5,
**caractérisé en ce que**
l'élément de retenue (32) et l'élément de fixation (20) sont formés par une pièce hybride.
